# EUROPÄISCHE PATENTSCHRIFT

(11) **EP 2 861 378 B1**
(45) Veröffentlichungstag und Bekanntmachung des Hinweises auf die Patenterteilung: **07.09.2016**
(21) Anmeldenummer: 13715706.1
(22) Anmeldetag: 15.04.2013
(51) Int. Cl.: B24B 23/02, B24B 55/00, H02K 49/04, H02K 7/104

(54) **WERKZEUGMASCHINENBREMSVORRICHTUNG**
BRAKE FOR A MACHINE TOOL
FREIN POUR UNE MACHINE OUTIL

(30) Priorität: 15.06.2012 DE 102012210133
(43) Veröffentlichungstag der Anmeldung: 22.04.2015
(73) Patentinhaber: Robert Bosch GmbH, 70442 Stuttgart (DE)
(72) Erfinder: PAWALETZ, Anton, 70736 Fellbach (DE); LABER, Sebastian, 70771 Leinfelden-Echterdingen (DE); ESENWEIN, Florian, 70771 Leinfelden-Echterdingen (DE); LUTZ, Manfred, 70794 Filderstadt (DE)
(86) Internationale Anmeldenummer: PCT/EP2013/057799
(87) Internationale Veröffentlichungsnummer: WO 2013/185949

(56) Entgegenhaltungen:
- DE-A1-102010 043 184
- US-A- 2 774 895

## Beschreibung

### Stand der Technik

Aus der DE 199 32 578 B4 und der DE 10 2010 043 184 A1 ist bereits eine Werkzeugmaschinenbremsvorrichtung einer tragbaren Werkzeugmaschine bekannt, die eine Magnetfeldbremseinheit aufweist.

### Offenbarung der Erfindung

Die Erfindung geht aus von einer Werkzeugmaschinenbremsvorrichtung, insbesondere von einer Handwerkzeugmaschinenbremsvorrichtung, einer tragbaren Werkzeugmaschine, mit zumindest einer Magnetfeldbremseinheit.

Die Erfindung Schlägt ein Werkzeugmaschinenbremsvorrichtung gemäß Anspruch 1 vor.

Es wird vorgeschlagen, dass die Magnetfeldbremseinheit zumindest ein beweglich gelagertes Klauensegmentelement zu einer Änderung wenigstens einer Kenngröße eines magnetischen Felds der Magnetfeldbremseinheit umfasst. Unter einer "Magnetfeldbremseinheit" soll hier insbesondere eine Bremseinheit verstanden werden, die mittels einer Nutzung eines Magnetfelds eine Geschwindigkeit, insbesondere eine Umlaufgeschwindigkeit, eines sich bewegenden Bauteils, insbesondere eines sich drehenden Bauteils, im Vergleich zu einer Arbeitsgeschwindigkeit zumindest im Wesentlichen reibungsfrei verringert und/oder begrenzt, insbesondere zusätzlich zu einem rein reibungsbedingten Verringern und/oder Begrenzen der Geschwindigkeit infolge einer Lagerung des Bauteils. Unter "im Wesentlichen reibungsfrei verringern und/oder begrenzen" soll hier insbesondere ein Abbremsen eines Bauteils verstanden werden, das bis auf lagerbedingte Reibkräfte und/oder strömungsbedingte Widerstandskräfte frei von Reibkräften erfolgt. Insbesondere erfolgt das Abbremsen des Bauteils mittels der Magnetfeldbremseinheit entkoppelt von einem Kontakt zwischen dem Bauteil und einem Reibbelag eines Bremselements. Grundsätzlich ist jedoch auch denkbar, dass zusätzlich zu der zumindest im Wesentlichen reibungsfreien Magnetfeldbremseinheit eine mit der Magnetfeldbremseinheit gekoppelte oder entkoppelte Reibbremseinheit vorgesehen ist. Des Weiteren ist die Magnetfeldbremseinheit insbesondere als eine antriebsfremde Magnetfeldbremseinheit ausgebildet. Unter einer "antriebsfremden Magnetfeldbremseinheit" soll hier insbesondere eine Magnetfeldbremseinheit verstanden werden, die entkoppelt von einem Magnetfeld einer Antriebseinheit, wie beispielsweise eines Elektromotors, ein Abbremsen eines Bauteils mittels eines Magnetfelds bewirkt. Vorzugsweise sind ein Stator und/oder ein Läufer der Antriebseinheit entkoppelt von dem Magnetfeld der Magnetfeldbremseinheit. Die Magnetfeldbremseinheit ist bevorzugt dazu vorgesehen, das Bauteil in einem Bremszustand der Magnetfeldbremseinheit insbesondere in einem Zeitraum größer als 0,1 s, bevorzugt größer als 0,5 s und besonders bevorzugt kleiner als 3 s, ausgehend von einer Arbeitsgeschwindigkeit, abzubremsen, insbesondere auf eine Geschwindigkeit abzubremsen, die kleiner ist als 50 % der Arbeitsgeschwindigkeit, bevorzugt kleiner ist als 20 % der Arbeitsgeschwindigkeit und besonders bevorzugt auf eine Geschwindigkeit von 0 m/s abzubremsen.

Die Magnetfeldbremseinheit kann als Montagemodul ausgebildet sein. Der Ausdruck "Montagemodul" soll hier insbesondere einen Aufbau einer Einheit definieren, bei dem mehrere Bauteile vormontiert werden und die Einheit als Ganzes in einem Gesamtsystem, insbesondere in einer tragbaren Werkzeugmaschine, montiert wird. Das Montagemodul weist bevorzugt zumindest ein Befestigungselement auf, das dazu vorgesehen ist, das Montagemodul mit dem Gesamtsystem lösbar zu verbinden. Vorteilhafterweise kann das Montagemodul insbesondere mit weniger als 10 Befestigungselementen von dem Gesamtsystem demontiert werden, bevorzugt mit weniger als 8 Befestigungselementen und besonders bevorzugt mit weniger als 5 Befestigungselementen. Die Befestigungselemente sind besonders bevorzugt als Schrauben ausgebildet. Es ist jedoch auch denkbar, dass die Befestigungselemente als andere, einem Fachmann als sinnvoll erscheinende Elemente, wie beispielsweise Schnellspannelemente, werkzeuglos betätigbare Befestigungselemente usw., ausgebildet sind. Vorzugsweise kann zumindest eine Funktion des Montagemoduls, insbesondere eine Änderung der Polstellung der Permanentmagnete zur Aktivierung der Magnetfeldbremseinheit, in einem von dem Gesamtsystem demontierten Zustand gewährleistet werden. Das Montagemodul kann besonders bevorzugt von einem Endnutzer demontiert werden. Somit ist das Montagemodul als austauschbare Einheit ausgebildet, die durch ein weiteres Montagemodul ausgetauscht werden kann, wie beispielsweise im Fall eines Defekts des Montagemoduls oder einer Funktionserweiterung und/oder Funktionsänderung des Gesamtsystems.

Der Ausdruck "beweglich gelagert" soll hier insbesondere eine Lagerung einer Einheit und/oder eines Elements relativ zu zumindest einer weiteren Einheit und/oder relativ zu einem weiteren Element definieren, wobei die Einheit und/oder das Element, insbesondere entkoppelt von einer elastischen Verformung der Einheit und/oder des Elements und entkoppelt von bedingt durch ein Lagerspiel hervorgerufenen Bewegungsmöglichkeiten, eine Bewegungsmöglichkeit entlang zumindest einer Achse entlang einer Strecke größer als 1 mm, bevorzugt größer als 10 mm und besonders bevorzugt größer als 20 mm und/oder eine Bewegungsmöglichkeit um zumindest eine Achse um einen Winkel größer als 10°, bevorzugt größer als 45° und besonders bevorzugt größer als 60° aufweist. Das Klauensegmentelement ist hierbei bevorzugt drehbar um eine Bewegungsachse des Klauensegmentelements gelagert. Die Bewegungsachse des Klauensegmentelements verläuft vorzugsweise zumindest im Wesentlichen parallel oder koaxial zu einer Rotationsachse eines Abtriebselements, insbesondere einer Spindel, einer Abtriebseinheit der tragbaren Werkzeugmaschine. Unter "im Wesentlichen parallel" soll hier insbesondere eine Ausrichtung einer Richtung relativ zu einer Bezugsrichtung, insbesondere in einer Ebene, verstanden werden, wobei die Richtung gegenüber der Bezugsrichtung eine Abweichung insbesondere kleiner als 8°, vorteilhaft kleiner als 5° und besonders vorteilhaft kleiner als 2° aufweist. Es ist jedoch auch denkbar, dass die Bewegungsachse des Abtriebselements eine andere, einem Fachmann als sinnvoll erscheinende Ausrichtung aufweist.

Der Begriff "Klauensegmentelement" soll hier insbesondere ein Element definieren, das wenigstens einen zumindest im Wesentlichen parallel zur Bewegungsachse des Elements verlaufenden magnetisch leitenden Fortsatz zu einer Änderung eines magnetischen Felds aufweist, der, betrachtet entlang einer um die Bewegungsachse verlaufenden Richtung, eine Erstreckung aufweist, die geringer ist als eine Gesamterstreckung des Elements entlang der um die Bewegungsachse verlaufenden Richtung. Besonders bevorzugt weist das Klauensegmentelement eine Vielzahl an Fortsätzen auf, die, betrachtet entlang der um die Bewegungsachse verlaufenden Richtung, gleichmäßig verteilt bzw. beabstandet relativ zum darauffolgenden Fortsatz am Klauensegmentelement angeordnet sind. Hierbei können jeweils zwei entlang der um die Bewegungsachse verlaufenden Richtung direkt aufeinanderfolgenden Fortsätze durch einen Luftspalt voneinander getrennt sein oder mittels eines magnetisch nicht leitenden Verbindungselements, wie beispielsweise eines Kunststoffverbindungselements usw., miteinander verbunden sein. Vorzugsweise umfasst das Klauensegmentelement zumindest vier Fortsätze, die größtenteils entlang der um die Bewegungsachse verlaufenden Richtung durch Luftspalte voneinander getrennt ausgebildet sind. Es ist jedoch auch denkbar, dass das Klauensegmentelement eine von vier abweichende Anzahl an Fortsätzen aufweist. Das Klauensegmentelement ist bevorzugt verschieden von einem Magnetelement der Magnetfeldbremseinheit, insbesondere von einem Permanentmagnet der Magnetfeldbremseinheit, ausgebildet. Somit umfasst die Magnetfeldbremseinheit vorzugsweise zumindest ein von einem Magnetelement der Magnetfeldbremseinheit verschiedenes Klauensegmentelement zu einer Änderung wenigstens einer Kenngröße eines magnetischen Felds der Magnetfeldbremseinheit, das beweglich gelagert ist. Unter einer "Kenngröße eines magnetischen Felds" soll hier insbesondere ein Parameter verstanden werden, der ein magnetisches Feld definiert, wie beispielsweise ein magnetischer Fluss, eine magnetische Induktion, ein magnetischer Widerstand, eine magnetische Spannung, ein magnetischer Rückschluss usw. Der Begriff "ändern" soll hier insbesondere "einstellen" und/oder "beeinflussen" definieren. Vorzugsweise ist das Klauensegmentelement zumindest teilweise aus einem ferromagnetischen Werkstoff, wie beispielsweise Eisen-, Eisen-Cobalt- und/oder Eisen-Nickel-Legierungen, gebildet. Es ist jedoch auch denkbar, dass das Klauensegmentelement vollständig aus einem ferromagnetischen Werkstoff gebildet ist. Besonders bevorzugt ist das Klauensegmentelement dazu vorgesehen, in zumindest einem Betriebszustand bzw. in zumindest einer Betriebsposition einen Verlauf eines magnetischen Flusses bzw. eines magnetischen Rückschlusses zu ändern bzw. zu beeinflussen. Unter "vorgesehen" soll insbesondere speziell ausgelegt und/oder speziell ausgestattet verstanden werden. Mittels der erfindungsgemäßen Ausgestaltung kann konstruktiv einfach ein Wechsel zwischen einem Bremszustand und einem Freilaufzustand der Magnetfeldbremseinheit realisiert werden. Infolge einer Relativbewegung des Klauensegmentelements kann vorteilhaft ein magnetischer Rückschlusses der Magnetfeidbremseinheit geändert werden und dadurch eine Stärke eines Bremsmagnetfelds beeinflußt werden. Zudem kann vorteilhaft eine kompakte Werkzeugmaschinenbremsvorrichtung erreicht werden.

Des Weiteren wird vorgeschlagen, dass die Magnetfeldbremseinheit zumindest ein weiteres Klauensegmentelement zu einer Änderung wenigstens einer Kenngröße eines magnetischen Felds der Magnetfeldbremseinheit umfasst. Somit umfasst die Magnetfeldbremseinheit vorzugsweise zumindest ein weiteres von einem Magnetelement der Magnetfeldbremseinheit verschiedenes Klauensegmentelement zu einer Änderung wenigstens einer Kenngröße eines magnetischen Felds der Magnetfeldbremseinheit. Vorzugsweise weist das weitere Klauensegmentelement magnetisch leitende Fortsätze auf. Hierbei ist das weitere Klauensegmentelement bevorzugt zumindest teilweise aus einem ferromagnetischen Werkstoff, wie beispielsweise Eisen-, Eisen-Cobalt- und/oder Eisen-Cobalt-Nickel-Legierungen, gebildet. Besonders bevorzugt ist das weitere Klauensegmentelement mittels eines Zusammenwirkens mit dem Klauensegmentelement dazu vorgesehen, in zumindest einem Betriebszustand bzw. in zumindest einer Betriebsposition einen Verlauf eines magnetischen Flusses bzw. eines magnetischen Rückschlusses zu ändern bzw. zu beeinflussen. Vorzugsweise sind das Klauensegmentelement und das weitere Klauensegmentelement in zumindest einem Betriebszustand relativ zueinander beweglich. Vorzugsweise ist das weitere Klauensegmentelement beweglich gelagert. Hierbei ist das weitere Klauensegmentelement bevorzugt in zumindest einem Betriebszustand zusammen mit dem Klauensegmentelement beweglich. Mittels der erfindungsgemäßen Ausgestaltung kann vorteilhaft in zumindest einem Betriebszustand, insbesondere in einem Bremszustand, der Magnetfeldbremseinheit eine große magnetische Ruckflussfläche erreicht werden, die eine vorteilhaft Bremsung eines sich bewegenden Bauteils mittels der Magnetfeldeinheit ermöglicht.

Ferner wird vorgeschlagen, dass das Klauensegmentelement und das weitere Klauensegmentelement in zumindest einem Betriebszustand relativ zueinander beweglich sind. Vorzugsweise sind das Klauensegmentelement und das weitere Klauensegmentelement in einem Übergangszustand der Magnetfeldbremseinheit ausgehend von einem Freilaufzustand der Magnetfeldbremseinheit in einen Bremszustand der Magnetfeldbremseinheit relativ zueinander verdrehbar. Ferner sind das Klauensegmentelement und das weitere Klauensegmentelement bevorzugt in einem Übergangszustand der Magnetfeldbremseinheit ausgehend von einem Bremszustand der Magnetfeldbremseinheit in einem Freilaufzustand der Magnetfeldbremseinheit relativ zueinander verdrehbar. Die Werkzeugmaschinenbremsvorrichtung umfasst zu einer Bewegung des Klauensegmentelements und des weiteren Klauensegmentelements relativ zueinander zumindest eine mechanische Aktivierungseinheit. Unter einer "mechanischen Aktivierungseinheit" soll hier insbesondere eine Einheit verstanden werden, die infolge einer Relativbewegung einen Auslösevorgang und/oder einen Aktivierungsvorgang, insbesondere der Magnetfeldbremseinheit, einleitet, wobei die Relativbewegung von einer reinen Schaltbewegung eines Schaltelements zur Erzeugung eines elektrischen Signals abweichend ist und insbesondere von einer Bewegung eines Magnetelements und/oder von einer trägheitsbedingten Bewegung gebildet ist, insbesondere von einer trägheitsbedingten Bewegung eines sich drehenden Antriebselements, Abtriebselements und/oder eines Bearbeitungswerkzeugs. In diesem Zusammenhang soll hier unter einem "Auslösevorgang" insbesondere eine mechanische, elektrische, magnetische und/oder elektronische Signalisierung eines Zustands verstanden werden, die dazu vorgesehen ist, einen Aktivierungsvorgang einzuleiten. Unter einem "Aktivierungsvorgang" soll hier insbesondere eine mechanische, elektrische, magnetische und/oder elektronische Aktivierung der Magnetfeldbremseinheit zur Erzeugung von Kräften und/oder Drehmomenten zum Abbremsen eines Bauteils verstanden werden.

In einer bevorzugten Ausführung der efindungsgemäßen Werkzeugmaschinenbremsvorrichtung ist die Aktivierungseinheit dazu vorgesehen, den Auslösevorgang und den Aktivierungsvorgang infolge der Relativbewegung einzuleiten, insbesondere zumindest im Wesentlichen zeitlich unverzögert. Hierbei kann die Aktivierungseinheit dazu vorgesehen sein, infolge der Relativbewegung beispielsweise einen Auslösevorgang zu signalisieren und zumindest im Wesentlichen zeitgleich einen Aktivierungsvorgang der Magnetfeldbremseinheit einzuleiten. Eine Ausgestaltung der mechanischen Aktivierungseinheit, bei der durch die Relativbewegung als Auslösevorgang ein Schalter betätigt wird und ein mittels eines Aktors und/oder einer Federkraft und/oder mittels anderer, einem Fachmann als sinnvoll erscheinender Betätigungselemente an den Auslösevorgang anschließender Aktivierungsvorgang eingeleitet wird, ist ebenfalls denkbar. Ferner ist es ebenfalls denkbar, dass die Aktivierungseinheit eine Sensoreinheit umfasst, die die Relativbewegung sensiert und infolgedessen einen Auslösevorgang einleitet, wobei der Aktivierungsvorgang beispielsweise mittels eines Aktors eingeleitet wird.

Eine weitere erfindungsgemäße Ausgestaltung der Werkzeugmaschinenbremsvorrichtung kann darin bestehen, dass die Aktivierungseinheit mechanisch, elektrisch, magnetisch und/oder elektronisch mit einem Elektromagnet der Magnetfeldbremseinheit verbunden ist, wobei der Elektromagnet dazu vorgesehen ist, in zumindest einem Betriebsmodus ein magnetisches Feld der Magnetfeldbremseinheit zu beeinflussen. Der Elektromagnet kann ein zusätzliches Magnetfeld zu einem bereits bestehenden Magnetfeld der Magnetfeldbremseinheit erzeugen. Hierbei ist es denkbar, dass das zusätzliche Magnetfeld in einem Arbeitsmodus zumindest magnetische Kräfte des bereits bestehenden Magnetfelds der Magnetfeldbremseinheit zumindest teilweise kompensiert und/oder zumindest im Vergleich zu einer Stärke der magnetischen Kraft des Magnetfelds in einem Bremsmodus zumindest teilweise abschwächt. Der Elektromagnet der Magnetfeldbremseinheit kann vorteilhaft ebenfalls dazu vorgesehen sein, während eines Anlaufens einer Antriebseinheit der tragbaren Werkzeugmaschine in einem Betriebsmodus ein zusätzliches Drehmoment zur Erreichung einer Arbeitsdrehzahl der Antriebseinheit in einer kurzen Zeitspanne zu ermöglichen, wie vorzugsweise zur Erreichung eines Boostbetriebs. Mittels der mechanischen Aktivierungseinheit kann vorteilhaft eine zuverlässige Auslösung und/oder Aktivierung der Magnetfeldbremseinheit erreicht werden. Ferner kann in einer bevorzugten Ausführung der erfindungsgemäßen Werkzeugmaschinenbremsvorrichtung vorteilhaft auf elektrische Bauteile zum Auslösen und/oder Aktivieren der Magnetfeldbremseinheit verzichtet werden. Hierdurch kann vorteilhaft eine Fehleranfälligkeit der Magnetfeldbremseinheit gering gehalten werden. Mittels der zwei in zumindest einem Betriebszustand zueinander beweglichen Klauensegmentelemente kann konstruktiv einfach ein Schaltvorgang zu einem Schalten zwischen einem Bremszustand der Magnetfeldbremseinheit und einem Freilaufzustand der Magnetfeldbremseinheit realisiert werden.

Des Weiteren wird vorgeschlagen, dass die Magnetfeldbremseinheit zumindest ein Wirbelstromelement umfasst, das, betrachtet entlang einer zumindest im Wesentlichen senkrecht zu einer Bewegungsachse des Klauensegmentelements verlaufenden Richtung, in zumindest einem Betriebszustand zwischen dem Klauensegmentelement und dem weiteren Klauensegmentelement angeordnet ist. Unter dem Ausdruck "zwischen...angeordnet" soll hier insbesondere eine räumliche Anordnung verstanden werden, bei der zumindest entlang einer Geraden Bauteile hintereinander angeordnet sind und sich, entlang der Geraden betrachtet, zumindest teilweise überdecken bzw. die Gerade die Bauteile schneidet. Bevorzugt ist das Wirbelstromelement betrachtet entlang der zumindest im Wesentlichen senkrecht zu einer Bewegungsachse des Klauensegmentelements verlaufenden Richtung, zumindest in einem Bremszustand der Magnetfeldbremseinheit zwischen dem Klauensegmentelement und dem weiteren Klauensegmentelement angeordnet. Somit kann vorteilhaft in zumindest einem Betriebszustand, insbesondere einem Bremszustand, der Magnetfeldbremseinheit eine große Bremskraft zu einem Abbremsen zumindest eines sich bewegenden Bauteils erreicht werden.

Zudem wird vorgeschlagen, dass die Magnetfeldbremseinheit zumindest ein Wirbelstromelement umfasst, das an einem Rückschlusselement der Magnetfeldbremseinheit angeordnet ist. Unter einem "Wirbelstromelement" soll hier insbesondere ein Element verstanden werden, das dazu vorgesehen ist, ein Magnetfeld zu einem Abbremsen zumindest eines sich bewegenden Bauteils infolge von Wirbelströmen zu erzeugen. Somit kann vorteilhaft ein reibungsfreies Abbremsen eines sich bewegenden Bauteils realisiert werden.

Des Weiteren wird vorgeschlagen, dass die Magnetfeldbremseinheit zumindest ein relativ zu einem Getriebegehäuse ortsfestes Bremselement aufweist, das als Permanentmagnet ausgebildet ist. Somit kann vorteilhaft eine kompakte Magnetfeldbremseinheit erreicht werden. Ein Abtriebselement kann vorteilhaft bei einer Rotation von einem Gewicht des Bremselements entkoppelt ausgebildet sein.

Ferner wird vorgeschlagen, dass die Magnetfeldbremseinheit zumindest ein Bremselement aufweist, das als Permanentmagnet ausgebildet ist. Es ist jedoch auch denkbar, dass die Magnetfeldbremseinheit in einer alternativen Ausgestaltung ein als Spule ausgebildetes Bremselement zur Erzeugung eines magnetischen Felds aufweist. Das als Permanentmagnet ausgebildete Bremselement ist bevorzugt als Seltene-Erden-Magnet ausgebildet, wie beispielsweise aus Hartferit, Neodym-Eisen-Bor (NdFeB), Samarium-Cobalt (SmCo) usw. Es ist jedoch auch denkbar, dass der Permanentmagnet aus einem anderen, einem Fachmann als sinnvoll erscheinenden Werkstoff ausgebildet ist. Der Permanentmagnet ist vorzugsweise kreisringförmig ausgebildet. Des Weiteren weist der Permanentmagnet vorzugsweise ein entlang einer zumindest im Wesentlichen parallel zur Bewegungsachse des Klauensegmentelements verlaufenden Richtung verlaufendes inneres Magnetfeld auf. Vorzugsweise ist das als Permanentmagnet ausgebildete Bremselement als axial magnetisierter Magnet ausgebildet. Es kann konstruktiv einfach eine Magnetfeldbremseinheit erreicht werden. Ferner kann vorteilhaft eine von einer Spannungsversorgung unabhängige Magnetfeldbremseinheit erreicht werden. Somit kann vorteilhaft eine hohe Sicherheitsfunktion erreicht werden, da die Magnetfeldbremseinheit vorteilhaft ohne separat zugeführte elektrische Energie funktionsfähig ist.

In einer vorteilhaften Ausgestaltung der erfindungsgemäßen Werkzeugmaschinenbremsvorrichtung ist das Bremselement drehfest mit einem weiteren Klauensegmentelement der Magnetfeldbremseinheit verbunden. Unter "drehfest" soll insbesondere eine Verbindung verstanden werden, die ein Drehmoment und/oder eine Drehbewegung zumindest im Wesentlichen unverändert überträgt. Unter "zumindest im Wesentlichen unverändert übertragen" soll hier insbesondere eine bis auf einen Verlust infolge von Reibung und/oder von Toleranzen vollständige Übertragung von Kräften und/oder Drehmomenten von einem Bauteil auf ein weiteres Bauteil verstanden werden. Besonders bevorzugt ist das Bremselement fest am weiteren Klauensegmentelement fixiert. Hierbei kann das Bremselement mittels einer formschlüssigen, kraftschlüssigen und/oder stoffschlüssigen Verbindung am weiteren Klauensegmentelement fixiert sein. Bevorzugt ist das Bremselement mittels einer stoffschlüssigen Verbindung, insbesondere mittels Klebens, am weiteren Klauensegmentelement fixiert. Mittels der erfindungsgemäßen Ausgestaltung kann vorteilhaft eine bauraumsparende Anordnung des Bremselements erreicht werden.

In einer alternativen Ausgestaltung der erfindungsgemäßen Werkzeugmaschinenbremsvorrichtung ist das Bremselement über ein Rückschlusselement der Magnetfeldbremseinheit mit einem Wirbelstromelement der Magnetfeldbremseinheit verbunden. Hierbei kann das Bremselement mittels einer formschlüssigen, kraftschlüssigen und/oder stoffschlüssigen Verbindung am Rückschlusselement fixiert sein. Bevorzugt ist das Bremselement mittels einer stoffschlüssigen Verbindung, insbesondere mittels Klebens, am Rückschlusselement fixiert.

Zudem ist das Wirbelstromelement vorzugsweise mittels einer stoffschlüssigen Verbindung, insbesondere mittels Klebens, am Rückschlusselement fixiert. Es ist jedoch auch denkbar, dass das Wirbelstromelement mittels einer anderen, einem Fachmann als sinnvoll erscheinenden Verbindung, wie beispielsweise mittels einer formschlüssigen und/oder mittels einer stoffschlüssigen Verbindung, am Rückschlusselement fixiert ist. Mittels der erfindungsgemäßen Ausgestaltung kann in zumindest einem Betriebszustand ein vorteilhafter magnetischer Rückschluss zu einem Abbremsen eines sich bewegenden Bauteils realisiert werden.

Die Erfindung geht ferner aus von einer tragbaren Werkzeugmaschine, insbesondere von einer tragbaren Handwerkzeugmaschine, mit einer erfindungsgemäßen Werkzeugmaschinenbremsvorrichtung, insbesondere mit einer Handwerkzeugmaschinenbremsvorrichtung. Unter einer "tragbaren Werkzeugmaschine" soll hier insbesondere eine Werkzeugmaschine, insbesondere eine Handwerkzeugmaschine, verstanden werden, die von einem Bediener transportmaschinenlos transportiert werden kann. Die tragbare Werkzeugmaschine weist insbesondere eine Masse auf, die kleiner ist als 50 kg, bevorzugt kleiner als 20 kg und besonders bevorzugt kleiner als 10 kg. Die tragbare Werkzeugmaschine kann hierbei als Winkelschleifer, als Bohrmaschine, als Handkreissäge, als Meißelhammer und/oder als Bohrhammer usw. ausgebildet sein. Besonders bevorzugt ist die tragbare Werkzeugmaschine als Winkelschleifer ausgebildet. Es kann vorteilhaft eine Sicherheitsfunktion für einen Bediener der tragbaren Werkzeugmaschine erreicht werden, mit der vorteilhaft eine Verletzungsgefahr für einen Bediener gering gehalten werden kann.

Zudem wird vorgeschlagen, dass die tragbare Werkzeugmaschine zumindest eine Abtriebseinheit aufweist, die zumindest ein Abtriebselement umfasst, an der das Klauensegmentelement drehfest angeordnet ist. Unter einer "Abtriebseinheit" soll hier insbesondere eine Einheit verstanden werden, die mittels einer Antriebseinheit antreibbar ist und von der Antriebseinheit erzeugte Kräfte und/oder Drehmomente auf ein Bearbeitungswerkzeug überträgt. Bevorzugt ist die Abtriebseinheit als Winkelgetriebe ausgebildet ist. Es ist jedoch auch denkbar, dass die Abtriebseinheit eine andere, einem Fachmann als sinnvoll erscheinende Ausgestaltung aufweist, wie beispielsweise eine Ausgestaltung als Schneckengetriebe, als Zahnriementrieb, als Planetengetriebe usw. Zudem ist es ebenfalls denkbar, dass die Magnetfeldbremseinheit an einer Antriebseinheit der tragbaren Werkzeugmaschine angeordnet ist. Mittels der erfindungsgemäßen Ausgestaltung kann vorteilhaft eine kompakte Anordnung der Werkzeugmaschinenbremsvorrichtung an der tragbaren Werkzeugmaschine ermöglicht werden.

Die erfindungsgemäße Werkzeugmaschinenbremsvorrichtung und die erfindungsgemäße tragbare Werkzeugmaschine soll/sollen hierbei nicht auf die oben beschriebene Anwendung und Ausführungsform beschränkt sein. Insbesondere können die erfindungsgemäße Werkzeugmaschinenbremsvorrichtung und die erfindungsgemäße tragbare Werkzeugmaschine zu einer Erfüllung einer hierin beschriebenen Funktionsweise eine von einer hierin genannten Anzahl von einzelnen Elementen, Bauteilen und Einheiten abweichende Anzahl aufweisen.

### Zeichnung

Weitere Vorteile ergeben sich aus der folgenden Zeichnungsbeschreibung. In der Zeichnung sind Ausführungsbeispiele der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: eine erfindungsgemäße Werkzeugmaschine mit einer erfindungsgemäßen Werkzeugmaschinenbremsvorrichtung in einer schematischen Darstellung,
- Fig. 2: eine Detailansicht der erfindungsgemäßen Werkzeugmaschinenbremsvorrichtung aus Figur 1 in einer schematischen Darstellung,
- Fig. 3: eine Detailansicht eines magnetischen Flussverlaufs einer Magnetfeldbremseinheit der erfindungsgemäßen Werkzeugmaschinenbremsvorrichtung in einer schematischen Darstellung,
- Fig. 4: eine Detailansicht eines Abtriebselements einer Abtriebseinheit der erfindungsgemäßen tragbaren Werkzeugmaschine in einer schematischen Darstellung,
- Fig. 5: eine Detailansicht eines Mitnahmeelements einer Aktivierungseinheit der erfindungsgemäßen Werkzeugmaschinenbremsvorrichtung in einer schematischen Darstellung,
- Fig. 6: eine Schnittansicht der Magnetfeldbremseinheit in einem Freilaufzustand entlang der Linie A-A aus Figur 2 in einer schematischen Darstellung,
- Fig. 7: eine Schnittansicht der Magnetfeldbremseinheit in einem Bremszustand entlang der Linie A-A aus Figur 2 in einer schematischen Darstellung und
- Fig. 8: eine Detailansicht einer alternativen erfindungsgemäßen Werkzeugmaschinenbremsvorrichtung in einer schematischen Darstellung.

### Beschreibung der Ausführungsbeispiele

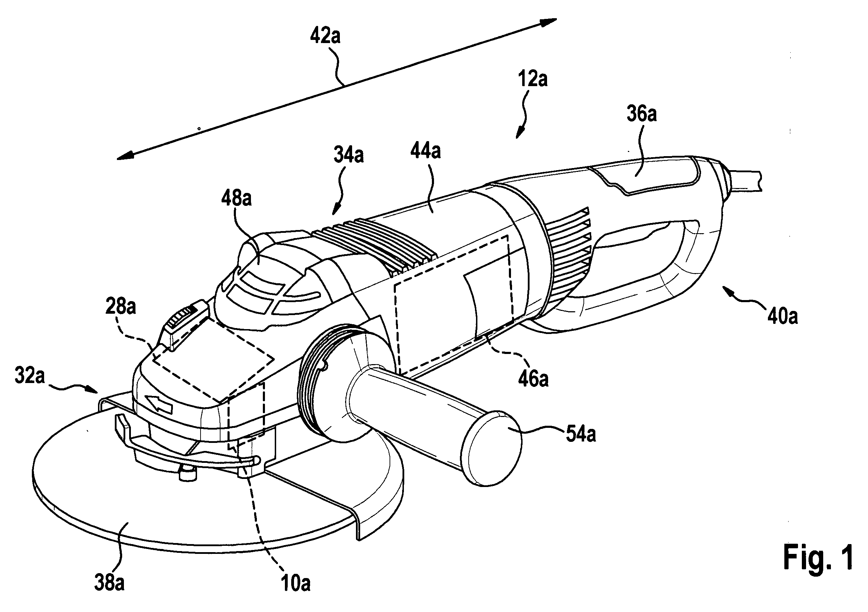

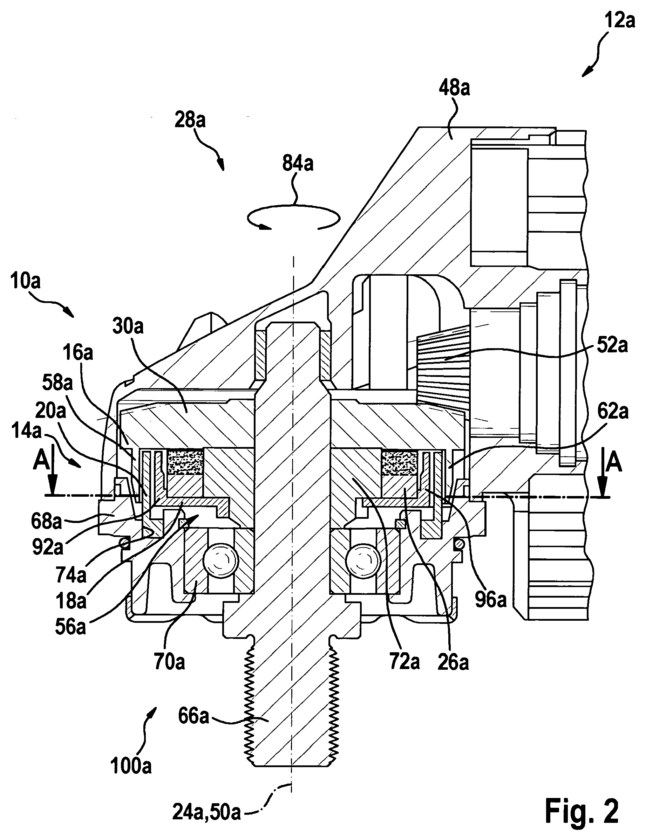

Figur 1 zeigt eine als Winkelschleifer ausgebildete tragbare Werkzeugmaschine 12a mit einer Werkzeugmaschinenbremsvorrichtung 10a. Der Winkelschleifer umfasst eine Schutzhaubeneinheit 32a, ein Werkzeugmaschinengehäuse 34a und einen Haupthandgriff 36a, der sich an einer einem Bearbeitungswerkzeug 38a abgewandten Seite 40a des Werkzeugmaschinengehäuses 34a in Richtung einer Haupterstreckungsrichtung 42a der tragbaren Werkzeugmaschine 12a erstreckt. Das Bearbeitungswerkzeug 38a ist hierbei als Schleifscheibe ausgebildet. Es ist jedoch auch denkbar, dass das Bearbeitungswerkzeug 38a als Trennoder Polierscheibe ausgebildet ist. Das Werkzeugmaschinengehäuse 34a umfasst ein Motorgehäuse 44a zur Aufnahme einer Antriebseinheit 46a der tragbaren Werkzeugmaschine 12a und ein Getriebegehäuse 48a zur Aufnahme einer Abtriebseinheit 28a der tragbaren Werkzeugmaschine 12a. Die Antriebseinheit 46a ist dazu vorgesehen, das Bearbeitungswerkzeug 38a über die Abtriebseinheit 28a rotierend anzutreiben. Die Abtriebseinheit 28a ist über ein um eine Rotationsachse rotierend angetriebenes Antriebselement 52a der Antriebseinheit 46a mit der Antriebseinheit 46a verbunden. Das Antriebselement 52a ist als Ankerwelle ausgebildet (Figur 2). Des Weiteren umfasst die Abtriebseinheit 28a eine um eine Rotationsachse 50a rotierbare Spindel 66a, einen Lagerflansch 68a und ein im Lagerflansch 68a angeordnetes Lagerelement 70a zu einer Lagerung der Spindel 66a. Der Lagerflansch 68a ist mittels Befestigungselementen (hier nicht näher dargestellt) der Abtriebseinheit 28a lösbar mit dem Getriebegehäuse 48a verbunden. Ferner kann das Bearbeitungswerkzeug 38a mittels eines Befestigungselements (hier nicht näher dargestellt) zur Bearbeitung eines Werkstücks drehfest mit der Spindel 66a verbunden werden. Das Bearbeitungswerkzeug 38a kann somit in einem Betrieb der tragbaren Werkzeugmaschine 12a rotierend angetrieben werden. Ferner ist an dem Getriebegehäuse 48a ein Zusatzhandgriff 54a angeordnet. Der Zusatzhandgriff 54a erstreckt sich quer zur Haupterstreckungsrichtung 42a der tragbaren Werkzeugmaschine 12a.

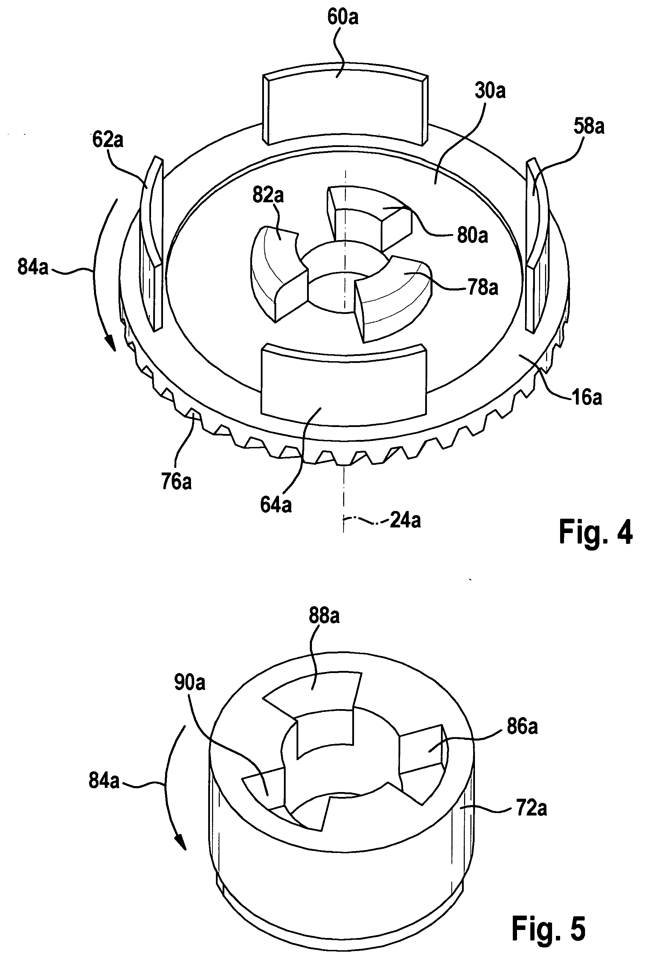

Die Werkzeugmaschinenbremsvorrichtung 10a ist im Getriebegehäuse 48a der tragbaren Werkzeugmaschine 12a angeordnet. Hierbei weist die Werkzeugmaschinenbremsvorrichtung 10a zumindest eine Magnetfeldbremseinheit 14a auf (Figur 2). Die Magnetfeldbremseinheit 14a umfasst zumindest ein beweglich gelagertes Klauensegmentelement 16a zu einer Änderung wenigstens einer Kenngröße eines magnetischen Felds der Magnetfeldbremseinheit 14a. Das Klauensegmentelement 16a ist drehfest an einem Abtriebselement 30a der Abtriebseinheit 28a angeordnet. Hierbei ist das Klauensegmentelement 16a einstückig mit dem Abtriebselement 30a ausgebildet (Figuren 2 und 4). Zu einer Änderung wenigstens einer Kenngröße eines magnetischen Felds der Magnetfeldbremseinheit 14a ist das Abtriebselement 30a somit aus einem magnetisch leitenden Material, wie beispielsweise einem ferromagnetischen Material, gebildet. Das Abtriebselement 30a ist als Tellerrad ausgebildet. Hierbei ist das Abtriebselement 30a mittels einer Spielpassung auf der Spindel 66a der Abtriebseinheit 28a angeordnet. Zu einer Drehmomentübertragung zwischen der Spindel 66a und dem Abtriebselement 30a weist die Abtriebseinheit 28a zumindest ein Mitnahmeelement 72a auf. Das Mitnahmeelement 72a ist drehfest mit der Spindel 66a verbunden. Hierbei kann das Mitnahmeelement 72a mittels einer formschlüssigen, kraftschlüssigen und/oder stoffschlüssigen Verbindung auf eine, einem Fachmann bereits bekannte Art und Weise drehfest mit der Spindel 66a verbunden sein.

Zu einer drehfesten Kopplung des Abtriebselements 30a und des Mitnahmeelements 72a weist das Abtriebselement 30a auf einer einer Verzahnung 76a des Abtriebselements 30a abgewandten Seite des Abtriebselements 30a drei Drehmitnahmefortsätze 78a, 80a, 82a auf (Figur 4). Es ist jedoch auch denkbar, dass das Abtriebselement 30a eine von drei abweichende Anzahl an Drehmitnahmefortsätzen 78a, 80a, 82a aufweist. Ein Fachmann wird je nach Anwendungsgebiet eine geeignete Anzahl an Drehmitnahmefortsätzen 78a, 80a, 82a am Abtriebselement 30a vorsehen. Die Drehmitnahmefortsätze 78a, 80a, 82a sind entlang einer Umfangsrichtung 84a gleichmäßig verteilt auf der der Verzahnung 76a abgewandten Seite des Abtriebselements 30a angeordnet. Die Umfangsrichtung 84a verläuft hierbei in einer sich zumindest im Wesentlichen senkrecht zur Rotationsachse 50a der Spindel 66a bzw. des Abtriebselements 30a erstreckenden Ebene. Ferner erstrecken sich die Drehmitnahmefortsätze 78a, 80a, 82a senkrecht zu der der Verzahnung 76a abgewandten Seite des Abtriebselements 30a. In einem montierten Zustand der Abtriebseinheit 28a erstrecken sich die Drehmitnahmefortsätze 78a, 80a, 82a in Richtung des Mitnahmeelements 72a.

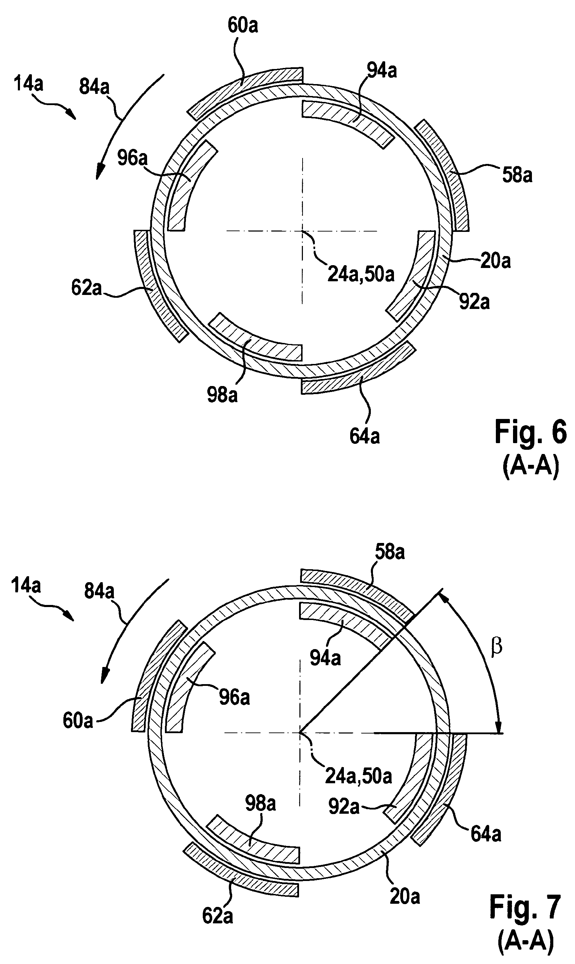

Figur 5 zeigt eine Detailansicht des Mitnahmeelements 72a. Das Mitnahmeelement 72a weist zur Aufnahme der Drehmitnahmefortsätze 78a, 80a, 82a Drehmitnahmeausnehmungen 86a, 88a, 90a auf (Figur 5). Die Drehmitnahmefortsätze 78a, 80a, 82a erstrecken sich somit in einem montierten Zustand entlang der Rotationsachse 50a der Spindel 66a in die Drehmitnahmeausnehmungen 86a, 88a, 90a hinein. Die Drehmitnahmeausnehmungen 86a, 88a, 90a sind entlang der Umfangsrichtung 84a gleichmäßig verteilt am Mitnahmeelement 72a angeordnet. Ferner weisen die Drehmitnahmeausnehmungen 86a, 88a, 90a entlang der Umfangsrichtung 84a eine im Vergleich zu den Drehmitnahmefortsätzen 78a, 80a, 82a größere Erstreckung auf. Hierdurch wird ein Drehspiel zwischen dem Abtriebselement 30a und dem Mitnahmeelement 72a entlang der Umfangsrichtung 84a erreicht. Das Drehspiel wird von einem Winkelbereich gebildet, um den das Abtriebselement 30a relativ zum Mitnahmeelement 72a um die Rotationsachse 50a der Spindel 66a gedreht werden kann. Der Winkelbereich wird hierbei betrachtet entlang der Umfangsrichtung 84a durch einen Abstand von entlang der Umfangsrichtung 84a direkt aufeinanderfolgenden Fortsätzen 58a, 60a, 62a, 64a des Klauensegmentelements 16a gebildet (Figuren 6 und 7). Die Drehmitnahmefortsätze 78a, 80a, 82a können somit entlang der Umfangsrichtung 84a in den Drehmitnahmeausnehmungen 86a, 88a, 90a relativ zu Randbereichen der Drehmitnahmeausnehmungen 86a, 88a, 90a bewegt werden. Das Mitnahmeelement 72a koppelt bei einem Anliegen der Drehmitnahmefortsätze 78a, 80a, 82a an Randbereichen der Drehmitnahmeausnehmungen 86a, 88a, 90a das Abtriebselement 30a drehfest mit der Spindel 66a. Es ist jedoch auch denkbar, dass die Drehmitnahmefortsätze 78a, 80a, 82a am Mitnahmeelement 72a und die Drehmitnahmeausnehmungen 86a, 88a, 90a am Abtriebselement 30a angeordnet sind. Die Drehmitnahmefortsätze 78a, 80a, 82a des Abtriebselements 30a und die Drehmitnahmeausnehmungen 86a, 88a, 90a des Mitnahmeelements 72a bilden eine mechanische Aktivierungseinheit 56a der Werkzeugmaschinenbremsvorrichtung 10a. Die Aktivierungseinheit 56a ist dazu vorgesehen, die Magnetfeldbremseinheit 14a ausgehend von einem Bremszustand in einen Freilaufzustand zu überführen und umgekehrt.

Ferner weist die Magnetfeldbremseinheit 14a zumindest ein weiteres Klauensegmentelement 18a zu einer Änderung wenigstens einer Kenngröße eines magnetischen Felds der Magnetfeldbremseinheit 14a auf. Hierzu ist das weitere Klauensegmentelement 18a aus einem ferromagnetischen Werkstoff gebildet. Das weitere Klauensegmentelement 18a ist am Mitnahmeelement 72a drehfest fixiert. Hierbei ist das Mitnahmeelement 72a mittels einer Presspassung drehfest auf der Spindel 66a fixiert. Es ist jedoch auch denkbar, dass das Mitnahmeelement 72a beispielsweise mittels einer Schraubverbindung, mittels einer Nietverbindung, mittels einer Klebeverbindung, mittels einer Schweißverbindung, mittels einer Passfederverbindung usw. drehfest auf der Spindel 66a fixiert ist. Das Mitnahmeelement 72a ist zu einer magnetischen Isolation aus einem magnetisch nicht leitenden Werkstoff gebildet, wie beispielsweise Edelstahl, Kunststoff usw. Es ist jedoch auch denkbar, ein Isolationselement zwischen dem Abtriebselement 30a und dem Mitnahmeelement 72a und/oder der Spindel 66a anzuordnen. Das Isolationselement könnte beispielsweise als Teflongleitbuchse usw. ausgebildet sein, die das Abtriebselement 30a auf der Spindel 66a lagert. Das Klauensegmentelement 16a und das weitere Klauensegmentelement 18a sind dazu vorgesehen, mittels eines Zusammenwirkens wenigstens eine Kenngröße eines magnetischen Felds der Magnetfeldbremseinheit 14a zu ändern. Hierbei ist die Aktivierungseinheit 56a dazu vorgesehen, das Klauensegmentelement 16a und das weitere Klauensegmentelement 18a in zumindest einem Betriebszustand relativ zueinander zu bewegen. Somit sind das Klauensegmentelement 16a und das weitere Klauensegmentelement 18a in zumindest einem Betriebszustand relativ zueinander beweglich. Das weitere Klauensegmentelement 18a ist drehfest am Mitnahmeelement 72a fixiert.

Das Klauensegmentelement 16a weist zu einer Änderung wenigstens einer Kenngröße eines magnetischen Felds der Magnetfeldbremseinheit 14a die vier Fortsätze 58a, 60a, 62a, 64a auf. Es ist jedoch auch denkbar, dass das Klauensegmentelement 16a eine von vier abweichende Anzahl an Fortsätzen 58a, 60a, 62a, 64a aufweist. Die Fortsätze 58a, 60a, 62a, 64a des Klauensegmentelements 16a sind entlang der Umfangsrichtung 84a relativ zueinander beabstandet am Klauensegmentelement 16a angeordnet. Zudem sind die Fortsätze 58a, 60a, 62a, 64a des Klauensegmentelements 16a gleichmäßig verteilt entlang der Umfangsrichtung 84a am Klauensegmentelement 16a angeordnet. Das weitere Klauensegmentelement 18a umfasst ebenfalls vier Fortsätze 92a, 94a, 96a, 98a (Figuren 6 und 7). Die Fortsätze 92a, 94a, 96a, 98a des weiteren Klauensegmentelements 18a sind gleichmäßig verteilt entlang der Umfangsrichtung 84a am weiteren Klauensegmentelement 18a angeordnet. Zudem sind die Fortsätze 92a, 94a, 96a, 98a des weiteren Klauensegmentelements 18a entlang der Umfangsrichtung 84a relativ zueinander beabstandet am weiteren Klauensegmentelement 18a angeordnet. In einem montierten Zustand des Klauensegmentelements 16a und des weiteren Klauensegmentelements 18a erstrecken sich die Fortsätze 92a, 94a, 96a, 98a des weiteren Klauensegmentelements 18a zumindest im Wesentlichen parallel zur Rotationsachse 50a der Spindel 66a in Richtung des Klauensegmentelements 16a. Die Fortsätze 58a, 60a, 62a, 64a des Klauensegmentelements 16a erstrecken sich in einem montierten Zustand zumindest im Wesentlichen parallel zur Rotationsachse 50a der Spindel 66a in Richtung des weiteren Klauensegmentelements 18a.

Ferner umfasst die Magnetfeldbremseinheit 14a zumindest ein Wirbelstromelement 20a, das, betrachtet entlang einer zumindest im Wesentlichen senkrecht zu einer Bewegungsachse 24a des Klauensegmentelements 16a verlaufenden Richtung, in zumindest einem Betriebszustand zwischen dem Klauensegmentelement 16a und dem weiteren Klauensegmentelement 18a der Magnetfeldbremseinheit 14a angeordnet ist. Das Wirbelstromelement 20a ist aus einem elektrisch leitfähigen Material gebildet, wie beispielsweise Aluminium und/oder Kupfer. Die Bewegungsachse 24a des einstückig mit dem Abtriebselement 30a ausgebildeten Klauensegmentelements 16a verläuft hierbei koaxial zur Rotationsachse 50a der Spindel 66a. Das Wirbelstromelement 20a ist kreisringförmig ausgebildet. Zudem ist das Wirbelstromelement 20a am Lagerflansch 68a der Abtriebseinheit 28a fixiert. Hierbei ist das Wirbelstromelement 20a in einer kreisringförmigen Ausnehmung 74a des Lagerflanschs 68a kraftschlüssig und/oder formschlüssig am Lagerflansch 68a fixiert. Die kreisringförmige Ausnehmung 74a ist als Ringnut ausgebildet, die entlang der Umfangsrichtung 84a verläuft. Somit werden das Klauensegmentelement 16a und das weitere Klauensegmentelement 18a in einem Betrieb der tragbaren Werkzeugmaschine 12a mittels der Spindel 66a relativ zum Wirbelstromelement 20a bewegt.

Des Weiteren weist die Magnetfeldbremseinheit 14a zumindest ein Bremselement 26a auf, das als Permanentmagnet ausgebildet ist. Das Bremselement 26a ist drehfest mit dem weiteren Klauensegmentelement 18a der Magnetfeldbremseinheit 14a verbunden. Somit ist das Bremselement 26a drehfest mit dem Mitnahmeelement 72a verbunden. Das Bremselement 26a ist, betrachtet entlang der zumindest im Wesentlichen senkrecht zur Bewegungsachse 24a des Klauensegmentelements 16a verlaufenden Richtung, zwischen den Fortsätzen 92a, 94a, 96a, 98a des weiteren Klauensegmentelements 18a und dem Mitnahmeelement 72a angeordnet. Zudem weist das Bremselement 26a eine axiale Magnetisierung auf, die entlang einer zumindest im Wesentlichen parallel zur Rotationsachse 50a der Spindel 66a betrachtet, ausgerichtet ist. Ein Seite des Bremselements 26a bildet einen magnetischen Nordpol des Bremselements 26a und eine Seite des Bremselements 26a bildet einen magnetischen Südpol des Bremselements 26a. Somit ist das Bremselement 26a, bezogen auf die Rotationsachse 50a der Spindel 66a, als axial magnetisierter Permanentmagnet ausgebildet. Zudem ist auch denkbar, dass die Magnetfeldbremseinheit 14a eine Vielzahl an Bremselementen 26a aufweist, die als Permanentmagnete ausgebildet sind.

Die Werkzeugmaschinenbremsvorrichtung 10a ist in einem Ruhezustand der tragbaren Werkzeugmaschine 12a, in dem eine Elektromotoreinheit der Antriebseinheit 46a unbestromt ist, in einem Bremsmodus. Die Magnetfeldbremseinheit 14a befindet sich somit in einem Bremszustand. Im Bremszustand der Magnetfeldbremseinheit 14a stehen sich die Fortsätze 92a, 94a, 96a, 98a des weiteren Klauensegmentelements 18a und die Fortsätze 58a, 60a, 62a, 64a des Klauensegmentelements 16a, betrachtet entlang einer zumindest im Wesentlichen senkrecht zur Rotationsachse 50a der Spindel 66a verlaufenden Richtung, gegenüber. Eine zumindest im Wesentlichen senkrecht zur Rotationsachse 50a der Spindel 66a verlaufende Gerade schneidet in einem Bremszustand der Magnetfeldbremseinheit 14a zumindest einen der Fortsätze 92a, 94a, 96a, 98a des weiteren Klauensegmentelements 18a, das Wirbelstromelement 20a und zumindest einen der Fortsätze 58a, 60a, 62a, 64a des Klauensegmentelements 16a. Somit überdecken sich die Fortsätze 58a, 60a, 62a, 64a des Klauensegmentelements 16a, das Wirbelstromelement 20a und die Fortsätze 92a, 94a, 96a, 98a des weiteren Klauensegmentelements 18a betrachtet entlang der zumindest im Wesentlichen senkrecht zur Rotationsachse 50a der Spindel 66a verlaufenden Richtung (Figur 7). Hierbei ist es denkbar, dass die Magnetfeldbremseinheit 14a zumindest ein Federelement aufweist, dass das Klauensegmentelement 16a und/oder das weitere Klauensegmentelement 18a mit einer Federkraft in Richtung einer Bremsposition, in der sich die Fortsätze 58a, 60a, 62a, 64a des Klauensegmentelements 16a und die Fortsätze 92a, 94a, 96a, 98a des weiteren Klauensegmentelements 18a überlappen, beaufschlagt. Hierdurch könnte eine selbsttätige bzw. eine unterstützende Bewegung des Klauensegmentelements 16a und/oder des weiteren Klauensegmentelements 18a bei einem Wegfallen eines Drehmoments der Elektromotoreinheit der Antriebseinheit 46a in eine Bremsposition erreicht werden.

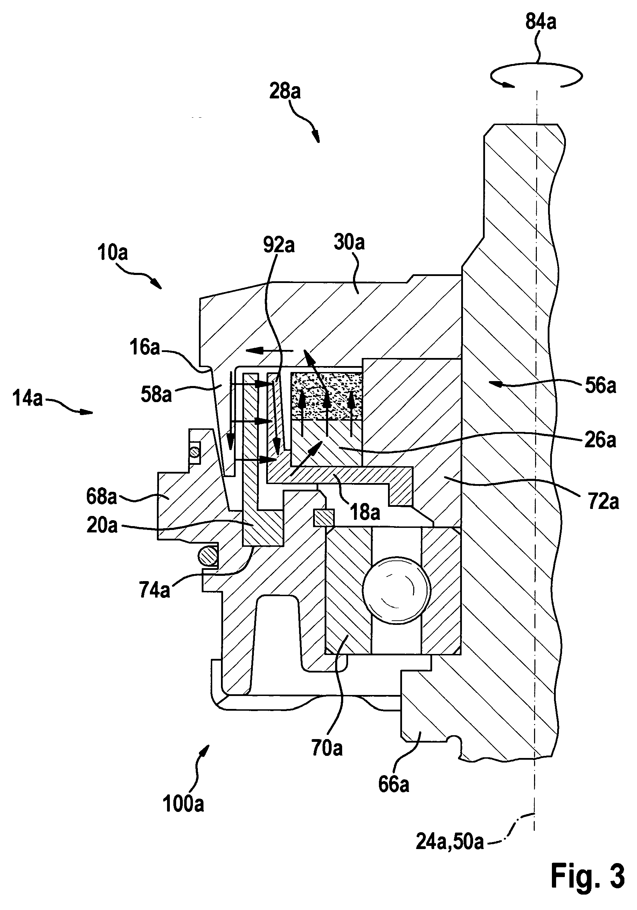

Ein magnetischer Fluss der Magnetfeldbremseinheit 14a bzw. des als Permanentmagnet ausgebildeten Bremselements 26a verläuft hierbei ausgehend von dem Bremselement 26a entlang einer zumindest im Wesentlichen parallel zur Rotationsachse 50a der Spindel 66a verlaufenden Richtung über einen Luftspalt in das Abtriebselement 30a. Vom Abtriebselement 30a verläuft der magnetische Fluss im Abtriebselement 30a zu den Fortsätzen 58a, 60a, 62a, 64a des Klauensegmentelements 16a. Der magnetische Fluss verläuft weiter über einen Luftspalt in das Wirbelstromelement 20a. Hierbei tritt der magnetische Fluss entlang einer zumindest im Wesentlichen senkrecht zur Rotationsachse 50a der Spindel 66a verlaufenden Richtung in das Wirbelstromelement 20a ein. Ausgehend vom Wirbelstromelement 20a verläuft der magnetische Fluss über einen Luftspalt in die Fortsätze 92a, 94a, 96a, 98a des weiteren Klauensegmentelements 18a. Der Fluss tritt entlang der zumindest im Wesentlichen senkrecht zur Rotationsachse 50a der Spindel 66a verlaufenden Richtung aus dem Wirbelstromelement 20a aus und in die Fortsätze 92a, 94a, 96a, 98a des weiteren Klauensegmentelements 18a ein. Von den Fortsätze 92a, 94a, 96a, 98a des weiteren Klauensegmentelements 18a verläuft der magnetische Fluss über das weitere Klauensegmentelement 18a zurück zum Bremselement 26a (Figur 3).

Bei einer Inbetriebnahme der tragbaren Werkzeugmaschine 12a durch eine Bestromung der Elektromotoreinheit der Antriebseinheit 46a wird das Abtriebselement 30a durch das Antriebselement 52a angetrieben. Hierbei wird das Abtriebselement 30a relativ zum Mitnahmeelement 72a um die Rotationsachse 50a der Spindel 66a verdreht, bis die Drehmitnahmefortsätze 78a, 80a, 82a an Randbereichen der Drehmitnahmeausnehmungen 86a, 88a, 90a anliegen. Hierdurch wird das Abtriebselement 30a drehfest mit der Spindel 66a gekoppelt. Die Spindel 66a wird infolgedessen rotierend angetrieben. Das an der Spindel 66a befestigte Bearbeitungswerkzeug 38a wird somit ebenfalls rotierend angetrieben. Das Klauensegmentelement 16a wird infolge der Relativbewegung zwischen dem Abtriebselement 30a und dem Mitnahmeelement 72a relativ zum weiteren Klauensegmentelement 18a verdreht. Hierdurch wird die Magnetfeldbremseinheit 14a in einen Freilaufzustand geschaltet, in dem geringe magnetische Kräfte des als Permanentmagnet ausgebildeten Bremselements 26a auf das Wirbelstromelement 20a einwirken. Infolge der Relativbewegung des Klauensegmentelements 16a und des weiteren Klauensegmentelements 18a werden die Fortsätze 58a, 60a, 62a, 64a des Klauensegmentelements 16a um die Bewegungsachse 24a des Klauensegmentelements 16a relativ zu den Fortsätzen 92a, 94a, 96a, 98a des weiteren Klauensegmentelements 18a verdreht. Hierdurch wird eine Überdeckung der Fortsätze 58a, 60a, 62a, 64a des Klauensegmentelements 16a und der Fortsätze 92a, 94a, 96a, 98a des weiteren Klauensegmentelements 18a entlang der zumindest im Wesentlichen senkrecht zur Rotationsachse 50a der Spindel 66a verlaufenden Richtung aufgehoben (Figur 6). Eine entlang der zumindest im Wesentlichen senkrecht zur Rotationsachse 50a der Spindel 66a verlaufenden Gerade schneidet hierbei entweder einen der Fortsätze 58a, 60a, 62a, 64a des Klauensegmentelements 16a und das Wirbelstromelement 20a oder einen der Fortsätze 92a, 94a, 96a, 98a des weiteren Klauensegmentelements 18a und das Wirbelstromelement 20a.

Bei einem Ausschalten der tragbaren Werkzeugmaschine 12a wird das Antriebselement 52a durch die Elektromotoreinheit der Antriebseinheit 46a abgebremst. Das auf der Spindel 66a befestigte Bearbeitungswerkzeug 38a dreht sich infolge einer Massenträgheit weiter. Die Spindel 66a wird somit ebenfalls weiter um die Rotationsachse 50a gedreht. Das Bearbeitungswerkzeug 38a weist im Vergleich zum Antriebselement 52a größere Massenträgheitsmomente auf und/oder die Verluste sind im Antriebselement 52a im Betreib höher als in der Spindel 66a, z.B. auf Grund Lagerverlusten, Leistungsaufnahmen eines Lüfters der Antriebseinheit 46a. Das Antriebselement 52a bremst somit das Abtriebselement 30a ab. Das Abtriebselement 30a wird relativ zum Mitnahmeelement 72a um die Rotationsachse 50a der Spindel 66a verdreht, bis die Drehmitnahmefortsätze 78a, 80a, 82a an Randbereichen der Drehmitnahmeausnehmungen 86a, 88a, 90a anliegen. Die Magnetfeldbremseinheit 14a wird somit ausgehend von einem Freilaufzustand in einen Bremszustand geschaltet. Das Klauensegmentelement 16a wird hierdurch infolge einer Relativbewegung des Abtriebselements 30a und des Mitnahmeelements 72a relativ zum weiteren Klauensegmentelement 18a verdreht. Hierbei werden die Fortsätze 58a, 60a, 62a, 64a des Klauensegmentelements 16a relativ zu den Fortsätzen 92a, 94a, 96a, 98a des weiteren Klauensegmentelements 18a verdreht, bis die Fortsätze 58a, 60a, 62a, 64a des Klauensegmentelements 16a den Fortsätzen 92a, 94a, 96a, 98a des weiteren Klauensegmentelements 18a gegenüberstehen. Infolge einer Relativbewegung der Fortsätze 58a, 60a, 62a, 64a des Klauensegmentelements 16a und der Fortsätze 92a, 94a, 96a, 98a des weiteren Klauensegmentelements 18a werden im stehenden Wirbelstromelement 20a Wirbelströme. Die Wirbelströme erzeugen einen magnetischen Fluss senkrecht und wirbeiförmig zu einem magnetischen Fluss der Magnetfeldbremseinheit 14a. Im Wirbelstromelement 20a wird somit ein magnetisches Feld erzeugt, das einem magnetischen Feld des als Permanentmagnet ausgebildeten Bremselement 26a entgegenwirkt. Hierdurch wird ein Bremsmoment erzeugt, das das sich mit der Spindel 66a relativ zum Wirbelstromelement 20a drehende Klauensegmentelement 16a und das sich mit der Spindel 66a relativ zum Wirbelstromelement 20a drehende weitere Klauensegmentelement 18a abbremst. Die Spindel 66a und das Bearbeitungswerkzeug 38a werden ebenfalls abgebremst. Das Klauensegmentelement 16a und das weitere Klauensegmentelement 18a sind somit dazu vorgesehen, mittels eines Zusammenwirkens wenigstens einen Verlauf eines magnetischen Flusses eines magnetischen Felds der Magnetfeldbremseinheit 14a zu ändern bzw. zu beeinflussen.

Des Weiteren ist die Magnetfeldbremseinheit 14a zusammen mit der Abtriebseinheit 28a als Montagemodul 100a ausgebildet (Figur 2). Das Montagemodul 100a umfasst vier als Schrauben ausgebildete Befestigungselemente (hier nicht dargestellt). Die Schrauben sind dazu vorgesehen, das Montagemodul 100a lösbar mit dem Getriebegehäuse 48a zu verbinden. Ein Bediener kann das Montagemodul 100a bei Bedarf von dem Getriebegehäuse 48a demontieren und durch ein weiteres hier nicht näher dargestelltes Montagemodul ersetzen, das entkoppelt von einer Magnetfeldbremseinheit ausgebildet ist und lediglich eine Abtriebseinheit umfasst. Das weitere Montagemodul kann somit vom Bediener alternativ zum Montagemodul 100a am Getriebegehäuse 48a montiert werden. Ein Bediener hat somit die Möglichkeit, die tragbare Werkzeugmaschine 12a mit dem Montagemodul 100a mit der Magnetfeldbremseinheit 14a und der Abtriebseinheit 28a oder mit dem weiteren Montagemodul mit einer Antriebseinheit auszustatten. Für einen Anwendungsfall, in dem die tragbare Werkzeugmaschine 12a entkoppelt von der Werkzeugmaschinenbremsvorrichtung 10a betrieben werden soll, kann das Montagemodul 100a durch das weitere Montagemodul von einem Bediener ausgetauscht werden. Hierzu demontiert der Bediener lediglich das Montagemodul 100a von dem Getriebegehäuse 48a und montiert das weitere Montagemodul am Getriebegehäuse 48a.

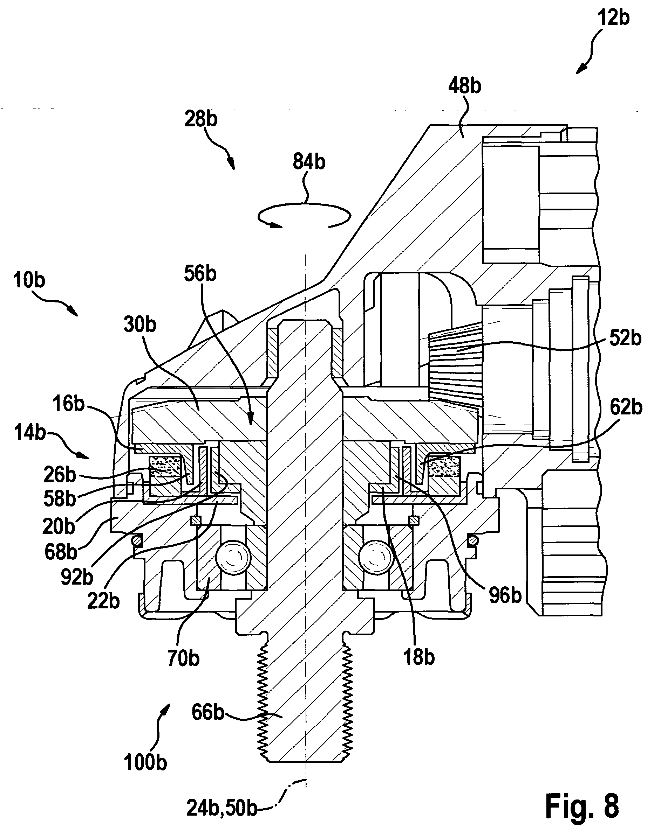

In Figur 8 ist ein alternatives Ausführungsbeispiel dargestellt. Im Wesentlichen gleichbleibende Bauteile, Merkmale und Funktionen sind grundsätzlich mit den gleichen Bezugszeichen beziffert. Zur Unterscheidung der Ausführungsbeispiele sind den Bezugszeichen der Ausführungsbeispiele die Buchstaben a und b hinzugefügt. Die nachfolgende Beschreibung beschränkt sich im Wesentlichen auf die Unterschiede zu dem ersten Ausführungsbeispiel in den Figuren 1 bis 6, wobei bezüglich gleichbleibender Bauteile, Merkmale und Funktionen auf die Beschreibung des ersten Ausführungsbeispiels in den Figuren 1 bis 6 verwiesen werden kann.

Figur 8 zeigt eine alternativ in einem Getriebegehäuse 48b einer tragbaren Werkzeugmaschine 12b angeordnete Werkzeugmaschinenbremsvorrichtung 10b. Die Werkzeugmaschinenbremsvorrichtung 10b umfasst eine Magnetfeldbremseinheit 14b, die zumindest ein beweglich gelagertes Klauensegmentelement 16b zu einer Änderung wenigstens einer Kenngröße eines magnetischen Felds der Magnetfeldbremseinheit 14b umfasst. Das Klauensegmentelement 16b ist drehfest an einem Abtriebselement 30b einer Abtriebseinheit 28b der tragbaren Werkzeugmaschine 12b fixiert. Hierbei ist das Klauensegmentelement 16b getrennt von dem Abtriebselement 30b ausgebildet und mittels einer, einem Fachmann als sinnvoll erscheinenden Verbindungsart drehfest am Abtriebselement 30b fixiert, wie beispielsweise mittels einer Klebeverbindung, mittels einer Schraubverbindung, mittels einer Nietverbindung usw. Das Klauensegmentelement 16b weist bis auf eine Befestigung am Abtriebselement 30b eine zumindest im Wesentlichen analoge Ausgestaltung zu dem in den Figuren 1 bis 7 beschriebenen Klauensegmentelement 16a auf. Die Magnetfeldbremseinheit 14b umfasst ferner zumindest ein weiteres Klauensegmentelement 18b zu einer Änderung wenigstens einer Kenngröße eines magnetischen Felds der Magnetfeldbremseinheit 14b. Das weitere Klauensegmentelement 18b ist drehfest an einem Mitnahmeelement 72b der Abtriebseinheit 28b fixiert. Das weitere Klauensegmentelement 18b weist eine zumindest im Wesentlichen analoge Ausgestaltung zu dem in den Figuren 1 bis 7 beschriebenen weiteren Klauensegmentelement 18a auf.

Des Weiteren umfasst die Magnetfeldbremseinheit 14b zumindest ein Wirbelstromelement 20b, das an einem Rückschlusselement 22b der Magnetfeldbremseinheit 14b angeordnet ist. Das Rückschlusselement 22b ist dazu vorgesehen, ein magnetisches Feld der Magnetfeldbremseinheit 14b im Bereich der Magnetfeldbremseinheit 14b zu verdichten und Streuflüsse gering zu halten. Hierbei ist das Rückschlusselement 22b an einem Lagerflansch 68b der Abtriebseinheit 28b fixiert. Das Rückschlusselement 22b ist kreisringförmig ausgebildet. Die Magnetfeldbremseinheit 14b umfasst ferner zumindest ein Wirbelstromelement 20b, das am Rückschlusselement 22b der Magnetfeldbremseinheit 14b angeordnet ist. Zudem weist die Magnetfeldbremseinheit 14b zumindest ein Bremselement 26b auf, das als Permanentmagnet ausgebildet ist. Das Bremselement 26b ist über das Rückschlusselement 22b der Magnetfeldbremseinheit 14b mit dem Wirbelstromelement 20b der Magnetfeldbremseinheit 14b verbunden. Somit werden das Klauensegmentelement 16b und das weitere Klauensegmentelement 18b während eines Betriebs der tragbaren Werkzeugmaschine 12b relativ zum Bremselement 26b bewegt. Die Magnetfeldbremseinheit 14b weist daher zumindest ein relativ zum Getriebegehäuse 48b ortsfestes Bremselement 26b auf, das als Permanentmagnet ausgebildet ist.

Ein magnetischer Fluss der Magnetfeldbremseinheit 14b bzw. des als Permanentmagnet ausgebildeten Bremselements 26b verläuft ausgehend von dem Bremselement 26b entlang einer zumindest im Wesentlichen parallel zu einer Rotationsachse 50b einer Spindel 66b der Abtriebseinheit 28b verlaufenden Richtung über einen Luftspalt in das Klauensegmentelement 16b. Vom Klauensegmentelement 16b verläuft der magnetische Fluss im Klauensegmentelement 16b zu Fortsätzen 58b, 62b des Klauensegmentelements 16b (in Figur 8 nur zwei Fortsätze dargestellt). Der magnetische Fluss verläuft weiter über einen Luftspalt in das Wirbelstromelement 20b. Hierbei tritt der magnetische Fluss entlang einer zumindest im Wesentlichen senkrecht zur Rotationsachse 50b der Spindel 66b verlaufenden Richtung in das Wirbelstromelement 20b ein. Ausgehend vom Wirbelstromelement 20b verläuft der magnetische Fluss über einen Luftspalt in Fortsätze 92b, 96b des weiteren Klauensegmentelements 18b (in Figur 8 nur zwei Fortsätze dargestellt). Der Fluss tritt entlang der zumindest im Wesentlichen senkrecht zur Rotationsachse 50b der Spindel 66b verlaufenden Richtung aus dem Wirbelstromelement 20b aus und in die Fortsätze 92b, 96b des weiteren Klauensegmentelements 18b ein. Von den Fortsätze 92b, 96b des weiteren Klauensegmentelements 18b verläuft der magnetische Fluss über einen Luftspalt in das Rückschlusselement 22b und zurück zum Bremselement 26b. Hinsichtlich weiteren Merkmalen und Funktionen der Werkzeugmaschinenbremsvorrichtung 10b darf auf die in den Figuren 1 bis 7 beschriebene Werkzeugmaschinenbremsvorrichtung 10a verwiesen werden.

## Patentansprüche

1. Werkzeugmaschinenbremsvorrichtung, insbesondere Handwerkzeugmaschinenbremsvorrichtung, einer tragbaren Werkzeugmaschine, mit zumindest einer Magnetfeldbremseinheit (14a; 14b), wobei die Magnetfeldbremseinheit (14a; 14b) zumindest ein beweglich gelagertes Klauensegmentelement (16a; 16b) zu einer Änderung wenigstens einer Kenngröße eines magnetischen Felds der Magnetfeldbremseinheit (14a; 14b) umfasst, **dadurch gekennzeichnet, dass** das Klauensegmentelement (16a; 16b) eine Vielzahl zumindest im Wesentlichen parallel zur Bewegungsachse (24a; 24b) des Klauensegmentelements (16a; 16b) verlaufender magnetisch leitender Fortsätze (58, 60, 62, 64) zu einer Änderung eines magnetischen Felds aufweist, die, betrachtet entlang der um die Bewegungsachse (24a; 24b) verlaufenden Richtung, beabstandet relativ zum darauffolgenden Fortsatz (58, 60, 62, 64) am Klauensegmentelement (16a; 16b) angeordnet sind.

2. Werkzeugmaschinenbremsvorrichtung nach Anspruch 1, **dadurch gekennzeichnet, dass** die Magnetfeldbremseinheit (14a; 14b) zumindest ein weiteres Klauensegmentelement (18a; 18b) zu einer Änderung wenigstens einer Kenngröße eines magnetischen Felds der Magnetfeldbremseinheit (14a; 14b) umfasst.

3. Werkzeugmaschinenbremsvorrichtung nach Anspruch 2, **dadurch gekennzeichnet, dass** das Klauensegmentelement (16a; 16b) und das weitere Klauensegmentelement (18a; 18b) in zumindest einem Betriebszustand relativ zueinander beweglich sind.

4. Werkzeugmaschinenbremsvorrichtung nach einem der vorhergehenden Ansprüche, **dadurch gekennzeichnet, dass** die Magnetfeldbremseinheit (14a; 14b) zumindest ein Wirbelstromelement (20a; 20b) umfasst, das, betrachtet entlang einer zumindest im Wesentlichen senkrecht zu einer Bewegungsachse (24a; 24b) des Klauensegmentelements (16a; 16b) verlaufenden Richtung, in zumindest einem Betriebszustand zwischen dem Klauensegmentelement (16a; 16b) und einem weiteren Klauensegmentelement (18a; 18b) der Magnetfeldbremseinheit (14a; 14b) angeordnet ist.

5. Werkzeugmaschinenbremsvorrichtung nach einem der vorhergehenden Ansprüche, **dadurch gekennzeichnet, dass** die Magnetfeldbremseinheit (14b) zumindest ein Wirbelstromelement (20b) umfasst, das an einem Rückschlusselement (22b) der Magnetfeldbremseinheit (14b) angeordnet ist.

6. Werkzeugmaschinenbremsvorrichtung nach einem der vorhergehenden Ansprüche, **dadurch gekennzeichnet, dass** die Magnetfeldbremseinheit (14b) zumindest ein relativ zu einem Getriebegehäuse (48b) ortsfestes Bremselement (26b) aufweist, das als Permanentmagnet ausgebildet ist.

7. Werkzeugmaschinenbremsvorrichtung nach einem der vorhergehenden Ansprüche, **dadurch gekennzeichnet, dass** die Magnetfeldbremseinheit (14a; 14b) zumindest ein Bremselement (26a; 26b) aufweist, das als Permanentmagnet ausgebildet ist.

8. Werkzeugmaschinenbremsvorrichtung nach Anspruch 7, **dadurch gekennzeichnet, dass** das Bremselement (26a) drehfest mit einem weiteren Klauensegmentelement (18a) der Magnetfeldbremseinheit (14a) verbunden ist.

9. Werkzeugmaschinenbremsvorrichtung zumindest nach Anspruch 6, **dadurch gekennzeichnet, dass** das Bremselement (26b) über ein Rückschlusselement (22b) der Magnetfeldbremseinheit (14b) mit einem Wirbelstromelement (20b) der Magnetfeldbremseinheit (14b) verbunden ist.

10. Tragbare Werkzeugmaschine, insbesondere Handwerkzeugmaschine, mit einer Werkzeugmaschinenbremsvorrichtung nach einem der vorhergehenden Ansprüche.

11. Tragbare Werkzeugmaschine nach Anspruch 10, **gekennzeichnet durch** zumindest eine Abtriebseinheit (28a; 28b), die zumindest ein Abtriebselement (30a; 30b) umfasst, an dem das Klauensegmentelement (16a; 16b) drehfest angeordnet ist.

## Claims

1. Machine tool braking apparatus, in particular hand-held machine tool braking apparatus, of a portable machine tool, having at least one magnetic field braking unit (14a; 14b), wherein the magnetic field braking unit (14a; 14b) comprises at least one movably mounted claw segment element (16a; 16b) for changing at least one characteristic variable of a magnetic field of the magnetic field braking unit (14a; 14b), **characterized in that** the claw segment element (16a; 16b) has a large number of magnetically permeable projections (58, 60, 62, 64), which run at least substantially parallel to the movement axis (24a; 24b) of the claw segment element (16a; 16b), for changing a magnetic field, which projections, as viewed along the direction which runs about the movement axis (24a; 24b), are arranged on the claw segment element (16a; 16b) in a manner spaced apart relative to the following projection (58, 60, 62, 64).

2. Machine tool braking apparatus according to Claim 1, **characterized in that** the magnetic field braking unit (14a; 14b) comprises at least one further claw segment element (18a; 18b) for changing at least one characteristic variable of a magnetic field of the magnetic field braking unit (14a; 14b).

3. Machine tool braking apparatus according to Claim 2, **characterized in that** the claw segment element (16a; 16b) and the further claw segment element (18a; 18b) can be moved relative to one another in at least one operating state.

4. Machine tool braking apparatus according to one of the preceding claims, **characterized in that** the magnetic field braking unit (14a; 14b) comprises at least one eddy current element (20a; 20b) which, when viewed along a direction which runs at least substantially perpendicular to a movement axis (24a; 24b) of the claw segment element (16a; 16b), is arranged between the claw segment element (16a; 16b) and a further claw segment element (18a; 18b) of the magnetic field braking unit (14a; 14b) in at least one operating state.

5. Machine tool braking apparatus according to one of the preceding claims, **characterized in that** the magnetic field braking unit (14b) comprises at least one eddy current element (20b) which is arranged on a return path element (22b) of the magnetic field braking unit (14b).

6. Machine tool braking apparatus according to one of the preceding claims, **characterized in that** the magnetic field braking unit (14b) has at least one braking element (26b) which is stationary relative to a gear mechanism housing (48b) and is in the form of a permanent magnet.

7. Machine tool braking apparatus according to one of the preceding claims, **characterized in that** the magnetic field braking unit (14a; 14b) has at least one braking element (26a; 26b) which is in the form of a permanent magnet.

8. Machine tool braking apparatus according to Claim 7, **characterized in that** the braking element (26a) is connected in a rotationally fixed manner to a further claw segment element (18a) of the magnetic field braking unit (14a).

9. Machine tool braking apparatus at least according to claim 6, **characterized in that** the braking element (26b) is connected to an eddy current element (20b) of the magnetic field braking unit (14b) by means of a return path element (22b) of the magnetic field braking unit (14b).

10. Portable machine tool, in particular hand-held machine tool, having a machine tool braking apparatus according to one of the preceding claims.

11. Portable machine tool according to Claim 10, **characterized by** at least one output drive unit (28a; 28b) which comprises at least one output drive element (30a; 30b) on which the claw segment element (16a; 16b) is arranged in a rotationally fixed manner.

## Revendications

1. Dispositif de frein de machine-outil, notamment dispositif de frein à main de machine-outil, d'une machine-outil portative, avec au moins une unité de frein à champ magnétique (14a ; 14b), l'unité de frein à champ magnétique (14a ; 14b) comprenant au moins un élément de segment de griffe (16a ; 16b) disposé de façon mobile pour faire varier au moins une grandeur caractéristique d'un champ magnétique de l'unité de frein à champ magnétique (14a ; 14b), **caractérisé en ce que** l'élément de segment de griffe (16a ; 16b) comporte une pluralité de prolongements (58, 60, 62, 64) à conduction magnétique s'étendant au moins pour l'essentiel parallèlement à l'axe de déplacement (24a ; 24b) de l'élément de segment de griffe (16a ; 16b) pour faire varier un champ magnétique, lesdits prolongements étant disposés, vus le long de la direction s'étendant autour de l'axe de déplacement (24a ; 24b), à une certaine distance par rapport au prolongement (58, 60, 62, 64) suivant, au niveau de l'élément de segment de griffe (16a ; 16b).

2. Dispositif de frein de machine-outil selon la revendication 1, **caractérisé en ce que** l'unité de frein à champ magnétique (14a ; 14b) comprend au moins un élément de segment de griffe (18a ; 18b) supplémentaire permettant de faire varier au moins une grandeur caractéristique d'un champ magnétique de l'unité de frein à champ magnétique (14a ; 14b).

3. Dispositif de frein de machine-outil selon la revendication 2, **caractérisé en ce que** l'élément de segment de griffe (16a ; 16b) et l'élément de segment de griffe (18a ; 18b) supplémentaire sont mobiles l'un par rapport à l'autre dans au moins un état de fonctionnement.

4. Dispositif de frein de machine-outil selon l'une quelconque des revendications précédentes, **caractérisé en ce que** l'unité de frein à champ magnétique (14a ; 14b) comprend au moins un élément à courant de Foucault (20a ; 20b) qui, considéré le long d'une direction s'étendant au moins pour l'essentiel perpendiculairement à un axe de déplacement (24a ; 24b) de l'élément de segment de griffe (16a ; 16b), est disposé dans au moins un état de fonctionnement entre l'élément de segment de griffe (16a ; 16b) et un élément de segment de griffe (18a ; 18b) supplémentaire de l'unité de frein à champ magnétique (14a ; 14b).

5. Dispositif de frein de machine-outil selon l'une quelconque des revendications précédentes, **caractérisé en ce que** l'unité de frein à champ magnétique (14b) comprend au moins un élément à courant de Foucault (20b) disposé au niveau d'un élément de retour (22b) de l'unité de frein à champ magnétique (14b).

6. Dispositif de frein de machine-outil selon l'une quelconque des revendications précédentes, **caractérisé en ce que** l'unité de frein à champ magnétique (14b) comporte au moins un élément de frein (26b) fixe sur place par rapport à un carter de boîte de vitesses (48b), ledit élément étant réalisé sous la forme d'un aimant permanent.

7. Dispositif de frein de machine-outil selon l'une quelconque des revendications précédentes, **caractérisé en ce que** l'unité de frein à champ magnétique (14a ; 14b) comporte au moins un élément de frein (26a ; 26b) réalisé sous la forme d'un aimant permanent.

8. Dispositif de frein de machine-outil selon la revendication 7, **caractérisé en ce que** l'élément de frein (26a) est relié solidairement en rotation à un élément de segment de griffe (18a) supplémentaire de l'unité de frein à champ magnétique (14a).

9. Dispositif de frein de machine-outil selon la revendication 6 au moins, **caractérisé en ce que** l'élément de frein (26b) est relié à un élément à courant de Foucault (20b) de l'unité de frein à champ magnétique (14b) via un élément de retour (22b) de l'unité de frein à champ magnétique (14b).

10. Machine-outil portative, notamment machine-outil à main, avec un dispositif de frein de machine-outil selon l'une quelconque des revendications précédentes.

11. Machine-outil portative selon la revendication 10, **caractérisée par** au moins une unité d'entraînement en sortie (28a ; 28b) comprenant au moins un élément d'entraînement de sortie (30a ; 30b) au niveau duquel l'élément de segment de griffe (16a ; 16b) est disposé solidairement en rotation.
